(19) Europäisches Patentamt

European Patent Office

Office européen des brevets

(11) **EP 1 906 145 A2**

(12) **EUROPEAN PATENT APPLICATION**

(43) Date of publication:
**02.04.2008 Bulletin 2008/14**

(51) Int Cl.:
*G01C 19/72* (2006.01)

(21) Application number: **07117207.6**

(22) Date of filing: **25.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **29.09.2006 US 529967**

(71) Applicant: **Honeywell International Inc.**
**Morristown NJ 07962 (US)**

(72) Inventor: **Greening, Thomas C.**
**Cupertino, CA 95014 (US)**

(74) Representative: **Buckley, Guy Julian**
**Patent Outsourcing Limited**
**1 King Street**
**Bakewell**
**Derbyshire DE45 1DZ (GB)**

(54) **Digital intensity suppression for reducing vibration and radiation sensitivity in a fiber gyroscope**

(57) A technique for operating an interferometric fiber optic gyroscope (IFOG) exploits digital intensity suppression to improve gyro performance. The IFOG [200] includes an optical portion configured to provide an optical signal [102], a photodetector [206] configured to convert the optical signal to a photodetector output signal [217] and an electronics portion [207] configured to provide a gyro output [260] based upon the photodetector output signal. The photodetector output signal is quantized [214] to create a digitized representation [241] of the optical signal. An intensity scaling value [245] is determined based upon the digital representation of the optical signal, and the photodetector output signal is adjusted based upon the intensity scaling value to create a scaled photodetector output signal. The digital representation of the optical signal is then digitally reconstructed [248] as a function of the scaled photodetector output signal and the intensity scaling value. From the reconstructed signal, a demodulation technique [250] is applied that removes the intensity-sensitivity while preserving the sensitivity to rotation rate. The gyro output or servo feedback [262] in a closed-loop system is thereby based upon the intensity-suppressed demodulated digital representation of the reconstructed optical signal.

FIG. 2

EP 1 906 145 A2

## Description

This invention was made with Government support. The Government has certain rights in this invention.

TECHNICAL FIELD

The present invention generally relates to fiber optic gyroscopes, and more particularly relates to techniques and structures for reducing the adverse effects of vibration and/or radiation in a fiber optic gyroscope.

BACKGROUND

For many years, fiber optic gyroscopes have been used in guidance and navigation systems for aircraft, satellites, missiles, watercraft and other moving objects. Fiber optic gyroscopes typically generate two beams of laser light that rotate in opposite directions around a coil of optical fiber. As the coil rotates, the propagation of the light beams within the fiber varies according to the well-known Sagnac Effect. By sensing relative changes in the two counter-rotating light beams within the coil, the rotation of the coil itself can be detected with a very high level of accuracy. This rotation of the coil can be readily correlated to rotation of a vehicle, missile or other object.

In a typical interferometric fiber optic gyroscope (IFOG), a fiber light source (FLS) emits light with a relatively broad bandwidth and a stable wavelength. This light then enters an integrated optical chip (IOC) where it is split into two counter-propagating light waves. After passing through the coil, the counter-propagating light waves interfere at a Y junction of the IOC. This interfered light emitted from the coil is then detected on a photodiode or other suitable photodetector. Because the detected light is indicative of the interference between the two light waves, the relative phases of the two beams can be determined and correlated to the rotation of the sensor.

Various effects, however, are known to reduce the accuracy and/or performance of fiber optic sensors. Mechanical vibrations within the gyro, for example, can reduce gyro accuracy by producing effects on the sensor output that appear as rotation. Synchronous intensity and phase oscillation, for example, can cause a rectified error with a non-zero average value, which appears as a false indication of steady-state rotation rate. Such vibrations can result from micro-bending in the fiber, from fiber stress points that convert light into unwanted polarization states, and/or the like.

Accordingly, it is desirable to provide a fiber optic gyroscope and associated operating methods with improved performance. In particular, it is desirable to reduce sensitivity to vibration and radiation effects without reducing the bandwidth of the sensor. Other desirable features and characteristics will become apparent from the subsequent detailed description of the invention and the appended claims, taken in conjunction with the accompanying drawings and this background of the invention.

BRIEF SUMMARY

Methods and apparatus are provided for reducing the adverse effects of vibration and/or radiation in an interferometric fiber optic gyroscope (IFOG) to improve gyro performance. According to various embodiments, the IFOG includes an optical portion configured to provide an optical signal, a photodetector configured to convert the optical signal to a photodetector output signal and an electronics portion configured to provide a gyro output based upon the photodetector output signal. The photodetector output signal is amplified and quantized to create a digitized representation of the optical signal. Both the difference ($a - b$) and sum ($a + b$) of the photodetector intensities between two bias modulation periods are measured. By dividing the measured difference signal by the sum signal, the intensity sensitivity is suppressed without reducing sensitivity to the rotational rate. The gyro output, or the feedback in a closed-loop IFOG, is then generated based upon the demodulated intensity-suppressed digital representation of the optical signal.

Other embodiments include other systems, devices, and techniques incorporating various concepts described herein. Additional detail about several exemplary embodiments is set forth below.

BRIEF DESCRIPTION OF THE DRAWINGS

The present invention will hereinafter be described in conjunction with the following drawing figures, wherein like numerals denote like elements, and

FIG. 1A is an interferogram plot showing the relationship between the voltage-induced phase shift and the photodetector intensity;

FIG. 1B is an interferogram plot showing the relationship between the voltage-induced phase shift and the photodetector intensity in the scenario where there is a loss in intensity; and

FIG. 2 is a block diagram of an exemplary fiber optic rotation sensor that includes one form of digital intensity suppression.

DETAILED DESCRIPTION

The following detailed description of the invention is merely exemplary in nature and is not intended to limit the invention or the application and uses of the invention. Furthermore, there is no intention to be bound by any theory presented in the preceding background of the invention or the following detailed description of the invention.

As briefly noted above, the performance of an interferometric fiber optic gyroscope (IFOG) can change significantly in response to mechanical vibration, radiation effects and/or the like that can affect the unmodulated intensity of the light impinging upon the photodetector. To reduce such adverse effects, the sensitivity to the intensity of the gyro photodetector output can be suppressed using digital logic to divide the demodulated photodetector signal by an orthogonal demodulation that is proportional to intensity.

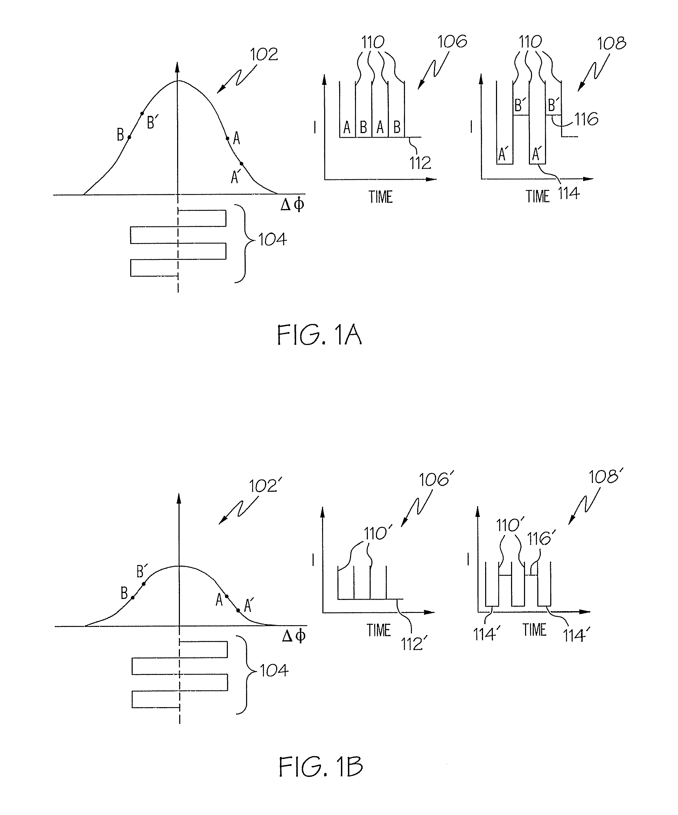

As noted above, vibrational errors can emanate from various sources in the IFOG. During typical IFOG operation, the counter-propagating light beams are modulated with a bias modulation $\phi_M$, which is often a square wave with a half period substantially equal to the transit time of the light through the coil $\tau$ and an induced phase amplitude of $\pm\dfrac{\beta}{2}$, where $\beta$ is the modulation depth. Figures 1A and 1B show exemplary photodiode intensities expressed as functions of the bias modulation. As can be seen in the figures, when the rotation rate is at or near zero, then the difference between the photodetector intensities at $a$ and $b$ is zero. The photodetector output $V_{pd}$ is conventionally given by the interference of the phase shifted counter-propagating waves:

$$V_{pd} = \frac{G\,I_0}{2}(1 + \cos(\Delta\phi_r + \Delta\phi_M))\,, \qquad (1)$$

where $I_0$ is the nominal intensity of light if no interference occurs, G is the pre-amplifier gain, and the $\Delta$ symbol indicates the difference in phase between the phase shift at time t and the phase shift one loop transit time earlier $t$ - $\tau$.

To obtain a measurement proportional to rate, the photodetector signal is typically demodulated over a $2\tau$ period, where $\tau$ is equal to the loop transit time synchronized to the bias modulation $\phi_M$ applied to the IOC, by taking the difference in photodetector intensities between two bias modulation half periods, denoted $a$ and $b$. The difference in photodetector intensities at times $a$ and $b$ is given by the interference of the phase shifted counter-propagating waves:

$$a - b = G\,I_0 \sin(\beta)\sin(\Delta\phi_r)\,, \qquad (2)$$

where the difference in bias modulation $\Delta\phi_M$ at time $a$ is -$\beta$ and at time $b$ is $\beta$.

As described above, however, various effects are known to reduce gyro accuracy and/or performance. Errors can arise in vibration, for example, with the presence of synchronously induced intensity variation in combination with a vibration-induced phase difference. Synchronous intensity and phase oscillation may cause a rectified error with a non-zero average value, which appears as a false indication of steady-state rotation rate. Typically, the vibration-induced time varying phase difference shift $\Phi_v$ at the vibration frequency $f_v$ of amplitude $\Delta\phi_v$ can be written as:

$$\Phi_V = \Delta\phi_v \cos(\omega_v t + \varepsilon)\,, \qquad (3)$$

where $\omega_v = 2\pi f_v$ and $\varepsilon$ is an arbitrary phase. In this case, for small rotation rates, the output of the gyro will correctly indicate the actual rotation rate environment by having its output suitably vary at $\omega_v$.

Vibration-induced intensity variation can be caused be modulation of micro bend loss in the fiber, both inside and outside of the light source. Vibration-induced intensity modulation can be caused by the modulation of polarization in the light source, the light source pigtail, in the fiber pigtail to the IOC chip, and/or in the coil. The effect may also be caused by modulating stresses inside the IOC or coupler or light source components. The optical intensity modulation in any of these cases can be represented by:

$$I_0 = I_a(1 + \alpha\cos(\omega_v t)) \, , \tag{4}$$

where $I_a$ is the average intensity impinging on the photodiode during vibration without bias modulation, and $\alpha$ indicates the amplitude of the intensity variation.

When there is simultaneous and synchronous vibration-induced phase and intensity modulation, Equation 3 and Equation 4 are combined with Equation 2 to generate the following demodulated photodetector signal $a$ - $b$:

$$a - b = G\, I_a(1 + \alpha\cos(\omega_v t))\sin(\beta)\sin(\Delta\phi_r + \Delta\phi_v\cos(\omega_v t + \varepsilon) + \Delta\phi_{FB}) \, . \tag{5}$$

For an open-loop IFOG ($\Delta\phi_{FB} = 0$) and when $\Delta\phi_r$ and $\Delta\phi_v$ are small, Equation 5 can be expanded to:

$$a - b = G\, I_a \sin(\beta)\begin{bmatrix} \Delta\phi_r + \\ \alpha\,\Delta\phi_r\cos(\omega_v t) - \alpha\,\Delta\phi_v\sin(\varepsilon)\cos(\omega_v t)\sin(\omega_v t) + \\ \alpha\,\Delta\phi_v\cos(\varepsilon)\cos^2(\omega_v t) \end{bmatrix} \tag{6}$$

where the first term is proportional to the desired Sagnac phase, the second and third terms are sinusoidal terms which average to zero, and the fourth term with the squared cosine of the vibration frequency is a rectified term that does not average to zero, giving a false measurement of rotation rate. The rectified error is proportional to the product of the intensity modulation of amplitude $\alpha$ and the phase difference modulation of amplitude $\Delta\phi_v$. The rectified error vanishes when the intensity modulation and the phase modulation are 90° out of phase ($\varepsilon = 90°$) and is at its maximum when they are in phase ($\varepsilon = 0°$).

Without the assumption of $\Delta\phi_r$ and $\Delta\phi_v$ being small, Equation 5 can be expanded with the Jacobi-Anger identities into a sum of Bessel functions:

$$a - b = G\, I_a \sin(\beta)(1 + \alpha\cos(\omega_v t))\left\{ \sin(\Delta\phi_r)\begin{bmatrix} J_0(\Delta\phi_v) + \\ 2\sum_{\substack{n=2 \\ even}}^{\infty} i^n J_n(\Delta\phi_v)\cos(n(\omega_v t + \varepsilon)) \end{bmatrix} + \\ 2\cos(\Delta\phi_r)\sum_{\substack{n=1 \\ odd}}^{\infty} i^{n-1} J_n(\Delta\phi_v)\cos(n(\omega_v t + \varepsilon)) \right\} , \tag{7}$$

where the error term that rectifies and gives a false rotation rate measurement is given by:

$$2\alpha G I_a \sin(\beta)\cos(\Delta\phi_r)\cos(\varepsilon)\cos(\omega_v t)\sum_{\substack{n=1 \\ odd}}^{\infty} i^{n-1} J_n(\Delta\phi_v)\cos(n(\omega_v t)) \tag{8}$$

which similarly goes to zero as either the intensity modulation $\alpha$ or phase modulation $\Delta\phi_v$ goes to zero.

For simplicity, the discussion herein emphasizes sinusoidal vibration inputs. In reality, a real vibration environment contains a superposition of sinusoidal vibration inputs that encompass an application-specific spectrum. In this case, the cumulative rectified error is a combination of error contributions arising from vibration at the various frequencies. Each error contribution is therefore a result of intensity modulation and a non-zero net optical phase shift at a specified frequency in the spectrum.

To increase the sensitivity to the difference in photodetector intensities at times $a$ and $b$, a front-end circuit is often used to subtract or filter the low frequency component of the photodetector signal which allows amplification of the high frequency difference signal without electronics saturation. To implement this technique, the front-end circuit either does not remove the low frequency component, or a digitally-controlled subtraction circuit such as the front-end described in US Patent 5,812,263 is used to remove low frequency components from the photodetector signal. In the latter case, the signal at the photodetector can be reconstructed by combining the measured signal at the A/D converter with the signal subtracted by the digital front-end servo. A digital representation of the photodetector signal without the frequency content below the demodulation frequency removed or suppressed can also be used.

As briefly noted above, a conventional interferometric fiber optic gyroscope (IFOG) typically applies two counter-propagating beams of light to a coil of optical fiber to produce a resulting phase difference between the beams that indicates rotation of the gyro. With reference now to FIG. 1A, a conventional interferogram 102 for a interferometric fiber optic gyroscope (IFOG) or similar sensor based upon the Sagnac effect is shown in conjunction with an exemplary bias modulation signal 104 and two plots 106, 108 of potential photodetector outputs.

The interferogram 102 shows a typical response for a FOG-type sensor, with the horizontal axis representing phase difference between the two counter-propagating light beams and the vertical axis representing the intensity of the optical signal output from the gyroscope optics. From interferogram 102, it can be readily determined that the photodetector output intensity is greatest when the two beams constructively interfere; that is, when the two beams are in phase with each other, or when the beams are an integer multiple of $2\pi$ radians out-of-phase with each other. Conversely, output intensity is least when the two beams destructively interfere, such as when the two beams are $\pi$ radians out-of-phase with each other. Frequently, the gyro sensor is biased to operate at +/- $\pi/2$ radians, since these operating points represent the greatest slope of interferogram 102 (i.e. the points at which small changes in phase difference produce relatively large change in output signal intensity). An example of a phase bias modulation signal is indicated in FIG. 1A by signal 104. Although signal 104 is shown as a square wave in FIG. 1A, alternate embodiments, such as closed-loop systems, may use ramp, sawtooth or other bias waveforms as appropriate.

Graphs 106 and 108 show exemplary output plots for a non-rotating and a rotating gyro, respectively. As shown in graph 106, a non-rotating gyroscope produces a relatively constant photodetector output signal 112 as the photodetector output alternates between points *a* and *b* on interferogram 102, corresponding to the bias applied by modulation signal 104. During transitions between points *a* and *b,* a so-called "glitch" 110 appears in the output 106. These glitches 110, although brief, can create issues with regard to processing the signal 106, as described more fully below.

Graph 108 shows an exemplary photodetector output signal when the gyro sensing coil is experiencing rotation. As the rotation of the coil induces additional phase shift to that produced by bias signal 104, the output 108 alternates between point *a'* and point *b'* on interferogram 102, producing a signal with two distinctly different levels 114 and 116, respectively. Glitches 110 that result from transitions between points *a'* and *b'* on interferogram 102 remain present in the signal 108 as well.

FIG. 1B is similar to FIG. 1A except that the intensity has been reduced, as exemplified by the height of the interferogram. In this scenario, for the same amount of rotation rate, the difference in levels 114' and 116' is smaller than in the case with larger intensity.

By monitoring levels 114 and 116 in output signal 108, the amount of phase shift between the counter-rotating beams can be deduced. This phase shift can, in turn, be correlated to a rate of rotation. Typical closed-loop IFOGs servo the difference in the levels, described by Equation 2.6, to zero by altering the modulation signal. Such implementations can have residual sensitivities to intensity variations, especially if those intensity variations occur at frequencies above the bandwidth of the closed-loop servo. Additionally, the closed-loop servo bandwidth of such implementations is also proportional to the unmodulated intensity of the photodetector signal.

To significantly suppress the sensitivity to intensity, the photodetector signal is not demodulated as *a - b* as shown in Equation 5, but rather as the ratio of the difference between levels 114 and 116 to the sum of the two levels. Stated algebraically, the ratio is given by:

$$\frac{a-b}{a+b} = \frac{\sin(\beta)\sin(\Delta\phi_r + \Delta\phi_v\cos(\omega_v t + \varepsilon) + \Delta\phi_{FB})}{1 + \cos(\beta)\cos(\Delta\phi_r + \Delta\phi_v\cos(\omega_v t + \varepsilon) + \Delta\phi_{FB})} \qquad (9)$$

where *a* and *b* represent levels 114 and 116, respectively, in the photodetector output signal 108. Such a demodulation technique suppresses sensitivity to the intensity. In other words the term $I_a(1+\alpha\cos(\omega_v t))$ has been eliminated from Equation 5. As a consequence, vibration or radiation induced intensity rectification errors described by Equation 6 and Equation 8 are suppressed. In addition, the magnitude of the demodulated signal is proportional to the controlled modulation depth $\beta$ and the true rotation rate only. Consequently a closed-loop IFOG, where the feedback is generated by servoing the demodulated signal to zero, no longer has a servo bandwidth that depends on the intensity.

Various techniques for suppressing the vibration-induced intensity sensitivity of the open and closed-loop IFOGs have been attempted, with varying levels of success. A detailed explanation of certain types of vibration errors and one technique for suppressing such errors is provided in United States Patent No. 5,923,424 issued to Sanders et al. Other exemplary techniques for suppressing the intensity sensitivity of FOG signals are presented in US Patents 5,812,263 and 5,923,323, for example.

Digital intensity suppression avoids many of the shortcomings of the prior art. In the prior art, the concept of dividing the demodulated difference signal by the intensity is the same, but the determination of the intensity is different. In the prior art, the intensity measurement is typically bandwidth limited. In the case where the intensity is bandwidth limited, the prior art techniques are still sensitive to sudden changes in intensity, which can occur during extreme mechanical shock or an intense flash x-ray burst, for example. Also such techniques have previously assumed that the intensity variation is sinusoidal in nature with a constant average intensity $I_a$, preventing correction of longer term intensity variation such as loss due to space-level radiation or aging. Digital intensity suppression removes the intensity for all frequencies from DC to half the bias modulation frequency, without any assumptions on the nature of the intensity variation.

Also, implementation of digital intensity suppression with the digital subtraction front-end described in US Patent 5,812,263 has a number of advantages. First, the bias modulation glitches described above by changing phase on the interferogram are not spread in time by the front-end analog filtering. Typically, a traditional front-end circuit makes a tradeoff between glitch contamination leading to gyro bias, and turn-on time. For instance, in an AC-coupled front-end circuit, if the high-pass filter frequency is set to 0.1 Hz to prevent gyro bias errors from modulation glitches, then the start-up time is limited to 10 seconds. With digital intensity suppression and a digital subtraction front-end or DC-coupled front-end, then bias errors from glitches are minimized and the startup time is as fast as the bandwidth of the rotation rate feedback servo (typically on the order of a few kilohertz). Also because the servo bandwidth of the digital subtraction front-end circuit can also be on the order of a few kilohertz, the possibility of saturating the front-end circuitry during intensity variation is significantly reduced.

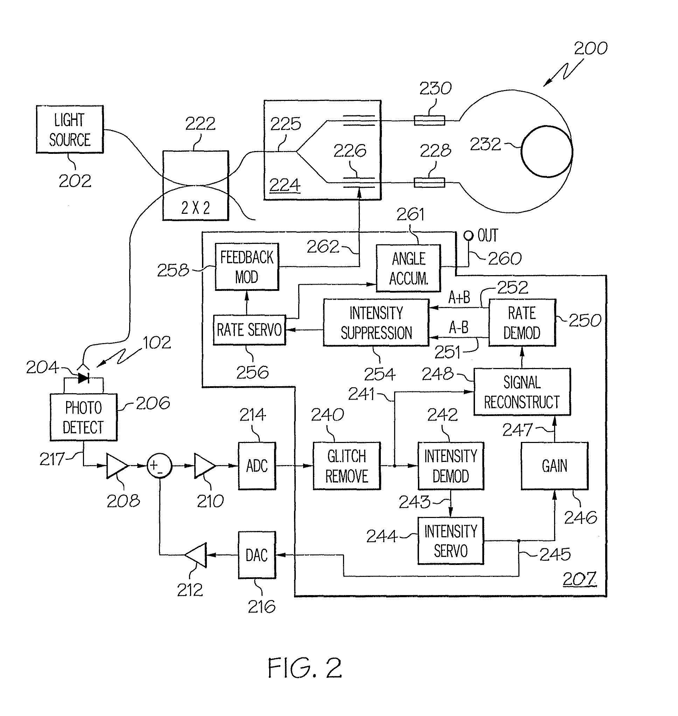

Turning now to FIG. 2, an exemplary fiber optic gyroscope 200 capable of suppressing the photodetector intensity while maintaining the low-frequency components of the photodetector output suitable includes a sensor light source 202 that provides broadband light with a stable wavelength to an optical assembly that includes an integrated optics chip (IOC) 224 and/or a fiber optic sensing ring 232 as appropriate. In various embodiments, light source 202 is connected to optical assembly 204 via an optical coupler 222 (e.g. a conventional 2x2 optical coupler) that also provides output light from the optical assembly to a photodetector 206 and/or other appropriate sensor circuitry capable of detecting light propagating in Sagnac ring 232. The sensed signals are then processed by electronics 207 to generate sensor output signal 260, as well as any loop closure or other modulation signals 262 used during gyro operation. Conventional interferometric FOG operation and components are described in various references, including United States Patent No. 5,999,304, although many variations may be made from the particular structures and techniques described therein.

Sensor light source 202 is any device or system capable of providing light to optics 224 and 232. In various embodiments, sensor light source 202 includes an optical fiber, glass substrate or other material doped with Erbium or other materials to generate light of appropriate wavelengths. Alternatively, light source 202 may be implemented with one or more luminescent or super-luminescent diodes, or with any other sources of light.

Sensor 200 may include any optical system or scheme capable of producing a phase shift in two counter-rotating beams in accordance with the Sagnac effect or the like. In various exemplary embodiments, sensor 200 suitably includes an integrated optics chip (IOC) 224 coupled to an optical coil 232. Alternatively, IOC 224 may be replaced by one or more discrete components such as splitters, couplers, polarizers, depolarizers and/or the like.

IOC 224 typically includes a Y-junction or other splitter 225 capable of splitting source light into two separate beams and then re-combining the beams upon exit from coil 232. IOC 224 also includes one or more phase modulators 226 capable of inducing phase changes between the counter-rotating beams in response to modulation signals 262 generated by electronics 207, and/or in response to other factors as appropriate. In many embodiments, a modulator 226 is provided on each leg of the light path extending from splitter 225 toward coil 232 so that light can be modulated upon both entering and exiting coil 232. IOC 224 may also include any number of polarizers, depolarizers, gratings, filters and/or other features as appropriate.

Optical coil 232 is typically a length of optical fiber on the order of 500 meters or more that is wound to a coil of convenient diameter, often on the order of five to ten centimeters or so. As noted above, light from source 202 counter-propagates in coil 232 to produce phase changes that indicate rotation of sensor 100. In some embodiments, light entering and exiting coil 232 may be depolarized, as appropriate, by depolarizers 228 and 230, although other sensors 100 operating under different parameters may not require or include such features.

In operation, then, light from sensor light source 202 is provided to optical chip 224, which suitably splits the light into two counter-rotating beams, provides both beams to opposite ends of optical coil 232, modulates incoming and outgoing light as appropriate, and re-combines the two beams into a common signal for subsequent processing. Light output from optical chip 224 may be provided (e.g. via coupler 222 as shown) to one or more photodetectors 206 that are capable of sensing the light and of producing a digital or analog electrical output signal in response thereto. In various embodiments, photodetector 206 is implemented using one or more photodiodes 204.

The intensity signal 102 produced at the end of the gyro assembly is sensed and provided to electronics 207 in any appropriate manner. In the exemplary embodiment shown in FIG. 2, optical signal 102 is appropriately sensed by photodetector 206, with the resulting photodetector output 217 providing an electrical indication of the intensity of signal 102. Because photodetector output signal 217 is typically a conventional analog electrical signal (e.g. with a voltage corresponding to the intensity of signal 102), it can be amplified (e.g. with amplifiers 208 and/or 210) or otherwise processed as any other analog signal. In a conventional embodiment, the amplified photodetector output is sampled or otherwise quantized in any appropriate manner by analog-to-digital converter (ADC) 214, with the resulting digital bits representing the photodetector output 217, and hence the optical output 102, in digital form that can be processed by electronics 207.

Electronics 207 represent any number of components, logic and/or systems capable of processing data as described herein. In various embodiments, electronics 207 include any type of microprocessor, microcontroller, digital signal processor, programmable integrated circuit, programmable gate array and/or the like. As such, the particular logic and other features described herein may be implemented in any type of hardware, software, firmware or other logic. Various embodiments, for example, include a digital processing circuit with associated memory capable of storing data and instructions to carry out the tasks described herein. Other embodiments implement the various functions in hardware or other programmed logic, or in any combination of hardware, software or firmware logic as appropriate.

Electronics 207 suitably includes any number of logic modules for performing the various digital signal processing tasks described herein. These modules are broken apart and separately identified herein for ease of explanation, but in practice the features and functions of the various modules described herein may be combined, supplemented, omitted and/or differently organized in any manner. In the exemplary embodiment shown in FIG. 2, electronics 207 includes hardware and/or software modules for performing tasks corresponding to glitch removal 240, intensity demodulation 242, intensity servo 244, digital signal reconstruction 248, rate demodulation 250, intensity suppression and/or output generation 254, and/or other features as appropriate.

The quantized (digital) representation of the optical output 102 is suitably received from ADC 214 at a port, pin, buffer or other input region of electronics 106. In alternate embodiments, electronics 106 are implemented with a microcontroller or the like with built-in ADC 214 functionality, thereby reducing the need for an external ADC 214. Typically, the output intensity 102 is sampled at an appropriate rate (typically on the order of several kilohertz, although other embodiments may sample at megahertz rates or greater), and digital samples are stored in a digital buffer or memory for further processing. Generally, samples corresponding to the "glitches" 110 (FIG. 1) can be discarded (module 240) by simply identifying short-duration samples that occur after bias modulation transitions. This simple method of digital glitch removal is relatively simple to implement in digital logic, and is much more effective than sample and hold circuitry applied between the photodetector 206 and ADC 214.

In many embodiments, the received digital samples can be identified, averaged or otherwise manipulated over time to identify two or more discrete output levels corresponding to level *a* 114 and level *b* 116 in FIG. 1. Further, the "sum" and "difference" of these processed *a* and *b* values can be further used to extract servo data and/or gyro output values as appropriate. In the embodiment of FIG. 2, intensity demodulation module 242 suitably performs accumulation or other computations to determine an average or other quantity 243 based upon the sum of the *a* and *b* values. This accumulated quantity 243, in turn, is provided to servo logic 244, which produces a control 245 that is used to center the photodetector output 217 on ADC 214. That is, by computing the sum of the *a* and *b* values, an average or mean value can be determined, and that mean value can be used to adjust the photodetector output 217 as appropriate. Typically, the photodetector output 217 is servo'ed on the most sensitive point of ADC 214 to increase resolution, and to remove the low-frequency components in Equation 2 that can result in front-end circuitry saturation. As shown in FIG. 2, the servo control 245 is provided to a digital-to-analog converter 216 to produce an analog signal that, in conjunction with optional amplifier 212, is subtracted from the photodetector output 217 as appropriate.

The intensity servo value 245 (and/or the accumulated quantity 243 used to determine the servo control value 245) can also be used to digitally reconstruct the original photodetector signal 102 within module 248. In various embodiments, value 245 is multipled or otherwise adjusted to apply a gain factor 246 to account for amplifiers 212 and 210, or to otherwise massage the digital signal to present as accurate of a representation of the original optical signal 102 as appropriate. Module 248 therefore reconstructs the original value of the optical output 102 by adding or otherwise combining the digital value 241 received from ADC 214 with the digital offset value 245 applied by intensity subtraction servo 245. As a result, the samples processed by demodulation module 250 suitably represent the actual optical output 102 from the optical components of sensor 200 (with the effects of glitches 110 digitally removed), rather than merely representing a scaled approximation of the photodetector output. Because rate demodulator 250 processes actual intensity values, sum and difference values 252 and 251 (respectively) can be determined with respect to levels 114 and 116 described in FIG. 1 above.

To generate an output signal 260 of sensor 200, then, the intensity suppression module 254 need simply divide the difference value 251 by the sum value 252. Although additional calculations may be performed for scaling, other types of noise removal, etc., the fundamental output value can be based upon Equation 1 presented above, thereby restoring the full dynamic range of the gyro sensor 200 while still suppressing the effects of mechanical vibration. Moreover, because servo module 244 can be implemented in radiation-hardened digital logic or the like, the responsiveness of gyro 200 to radiation events is improved over that of the prior art.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. Various changes may therefore be made in the function and arrangement of elements described in the exemplary embodiments without departing from the scope of the invention as set forth in the appended claims and their legal equivalents.

**Claims**

1.  A method of operating a fiber optic gyroscope [200] having an optical portion configured to provide an optical signal [102], a photodetector [206] configured to convert the optical signal to a photodetector output signal [217], and an electronics portion [207] configured to provide a gyro output [260] based at least in part upon the photodetector output signal, the method comprising the steps of:

    quantizing [214] the photodetector output signal to create a digitized representation [241] of the optical signal;
    determining an intensity scaling value [245] based upon the digital representation of the optical signal;
    adjusting [244] the intensity of the photodetector output signal based upon the intensity scaling value to create a scaled photodetector output signal [241];
    digitally reconstructing [248] the digital representation of the optical signal as a function of the scaled photodetector output signal and the intensity scaling value; and
    generating [250] the gyro output based upon the reconstructed digital representation of the optical signal.

2.  The method of claim 1 wherein the adjusting step comprises performing a digital to analog conversion [216] based upon the intensity scaling value and amplifying [212] an analog signal resulting from the digital-to-analog conversion.

3.  The method of claim 2 wherein the reconstructing step comprises adjusting the digital representation of the optical signal based upon the amount [247] of amplification provided in the adjusting step.

4.  The method of any of claims 1-3 wherein the digital representation of the optical signal comprises one of a plurality of optical signals [106].

5.  The method of claim 4 further comprising the step of computing a sum [252] and a difference [251] based upon at least two of the digital representations.

6.  The method of claim 5 wherein the intensity scaling value is based upon the sum of the at least two digital representations.

7.  The method of claim 6 wherein the gyro output is determined at least in part based upon a ratio of the difference value to the sum of the at least two digital representations.

8.  The method of claim 7 wherein the reconstructing step comprises digitally scaling the difference value based upon the sum of the at least two digital representations, wherein the at least two digital representations comprise representations of a local maximum and a local minimum of the photodetector output signal.

9.  A fiber optic gyroscope [200] comprising:

    an optical portion configured to provide an optical signal [102];
    a photodetector [206] configured to convert the optical signal to a photodetector output signal [217];
    an electronics portion [207] configured to provide a gyro output [260] based upon the photodetector output signal;

    **characterized in that** the electronics portion comprises:

    an analog-to-digital converter [214] configured to quantize the photodetector output signal to create a digitized representation of the optical signal;
    intensity servo logic [244] configured to determine an intensity scaling value [245] based upon the digital representation [241] of the optical signal and to adjust the intensity of the photodetector output signal based upon the intensity scaling value to create a scaled photodetector output signal;

signal reconstruction logic [248] configured to digitally reconstruct the digital representation of the optical signal as a function of the scaled photodetector output signal [241] and the intensity scaling value [245]; and

output logic [250, 261] configured to provide the gyro output based upon the reconstructed digital representation of the optical signal.

10. The fiber optic gyroscope of claim 9, wherein the electronics portion is further configured to compute a sum [252] and a difference [251] based upon at least two of the digital representations, wherein the intensity scaling value is based upon the sum of the at least two digital representations, and wherein the gyro output is determined at least in part based upon a ratio of the difference value to the sum of the at least two digital representations.

FIG. 1A

FIG. 1B

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5812263 A
- US 5923424 A
- US 5923323 A
- US 5999304 A